# EUROPEAN PATENT APPLICATION

(11) **EP 2 484 902 A2**
(43) Date of publication of application: **08.08.2012**
(21) Application number: 12153533.0
(22) Date of filing: 01.02.2012
(51) Int. Cl.: F03D 11/00

(54) **Pillow block for bed plate of wind turbine**

(30) Priority: 07.02.2011 US 201113021964
(71) Applicant: General Electric Company, Schenectady, NY 12345 (US)
(72) Inventor: Luneau, Michael James, Greenville, SC South Carolina 29615 (US); Sivantham, Mohan Muthu Kumar, 560066 Bangalore (IN); Conrad, Chad Robert, Greenville, SC South Carolina 29615 (US)
(74) Representative: Bedford, Grant Richard

(57) **Abstract**

A pillow block (30) for a bed plate (24) of a wind turbine (10) is disclosed. In one embodiment, the pillow block (30) includes a sleeve (40) defining a generally horizontal centerline (44) and an axial centerline (46). The sleeve (40) is configured to accommodate a shaft (20) generally extending along the axial centerline (46) therethrough. The pillow block (30) further includes a mount (50) extending from the sleeve (40). The mount (50) defines a generally horizontal axis (52) and at least one mounting surface (56). The at least one mounting surface (56) is configured for directly mounting the pillow block (30) to the bed plate (24).

## Description

The subject matter disclosed herein relates generally to wind turbines, and more particularly to pillow blocks for bed plates of wind turbines.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Various components of the wind turbine that are disposed in the nacelle must generally be supported. Thus, a bed plate is provided in the nacelle to support, for example, the shaft and, optionally, the gearbox if present, and the generator. In particular, the shaft must be supported as it extends from the rotor blades and the hub to the gearbox and/or generator. Typical prior art devices for supporting the shafts include pillow blocks and separate pedestals, which may be provided on the bed plate to support the shaft.

Typical prior art pillow blocks are configured to accommodate the shaft therein, and are bolted or otherwise fastened to the pedestals. The pedestals are provided to properly lift and align the shaft, and are welded or otherwise fastened to the bed plate. The intersection between the pillow block and the pedestal is positioned at a horizontal centerline of the pillow block. This positioning may reduce the deformation of the pillow block when the pillow block is subjected to bending due to axial loading of the shaft.

However, these prior art pillow blocks and pedestals have a variety of disadvantages. For example, bolting current pillow blocks to current pedestals and then welding current pedestals to bedplates may require a substantial amount of material, making the pillow blocks and pedestals, and thus the bed plate in general, increasingly heavy. This multitude of connection points may also introduce a multitude of potential failure points to the wind turbine. Additionally, the current design of the pillow blocks and pedestals may not allow for the efficient transfer of loads from the pillow blocks directly to the bed frame. Further, the alignment of the intersection between the pillow block and the pedestal may not be necessary in all cases and for all pillow blocks.

Thus, an improved pillow block for a bed plate in a wind turbine is desired. For example, a pillow block with a reduced mass, complexity, and assembly time would be advantageous. Additionally, a pillow block with a reduced number of failure points would be desired. Further, a pillow block that allows for the efficient transfer of loads from the pillow block directly to the bed frame would be advantageous.

Various aspects and advantages of the invention will be set forth in part in the following description, or may be clear from the description, or may be learned through practice of the invention.

In one embodiment, a pillow block for a bed plate of a wind turbine is disclosed. The pillow block includes a sleeve defining a generally horizontal centerline and an axial centerline. The sleeve is configured to accommodate a shaft generally extending along the axial centerline therethrough. The pillow block further includes a mount extending from the sleeve. The mount defines a generally horizontal axis and at least one mounting surface. The at least one mounting surface is configured for directly mounting the pillow block to the bed plate.

In another embodiment, a pillow block for a bed plate of a wind turbine is disclosed. The pillow block includes a sleeve defining a generally horizontal centerline and an axial centerline. The sleeve is configured to accommodate a shaft generally extending along the axial centerline therethrough. The pillow block further includes a mount extending from the sleeve. The mount defines a generally horizontal axis and at least one mounting surface. The at least one mounting surface is configured for mounting the pillow block to a pedestal of the bed plate. The generally horizontal axis is offset from the generally horizontal centerline.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of a wind turbine according to one embodiment of the present disclosure;
FIG. 2 is a perspective view of a bed plate, pillow blocks, and shaft according to one embodiment of the present disclosure;
FIG. 3 is a perspective view of a pillow block according to one embodiment of the present disclosure; and
FIG. 4 is a perspective view of a bed plate, pillow blocks, pedestals, and shaft according to another embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

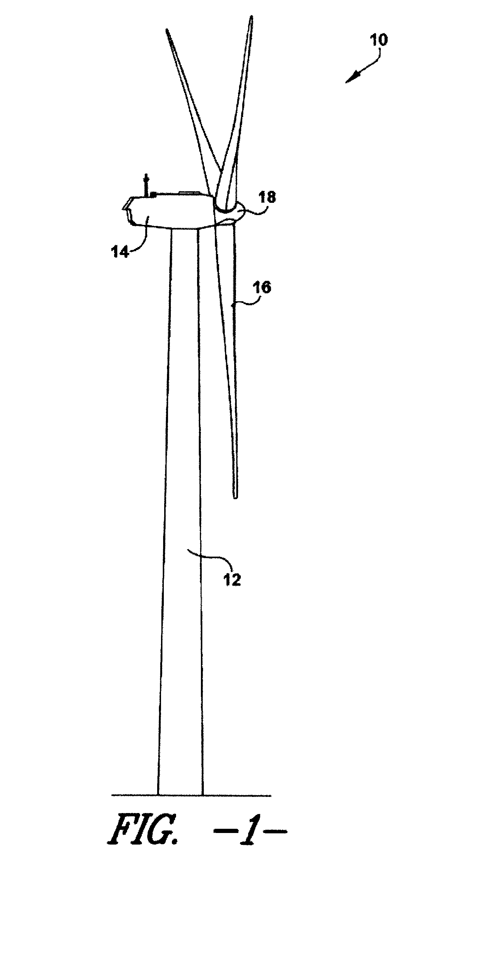

FIG. 1 illustrates a wind turbine 10 of conventional construction. The wind turbine 10 includes a tower 12 with a nacelle 14 mounted thereon. A plurality of rotor blades I6 are mounted to a rotor hub 18, which is in turn connected to a main flange that turns a main rotor shaft, as discussed below. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

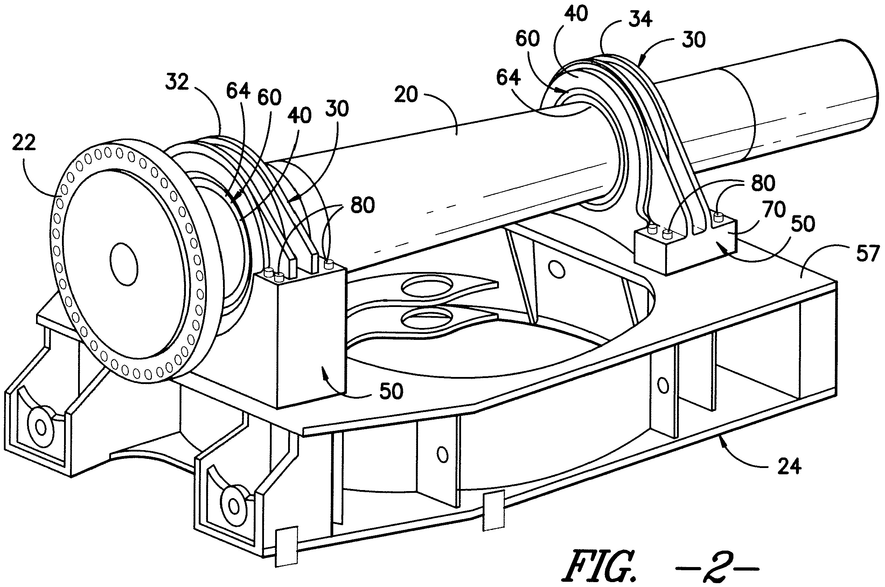

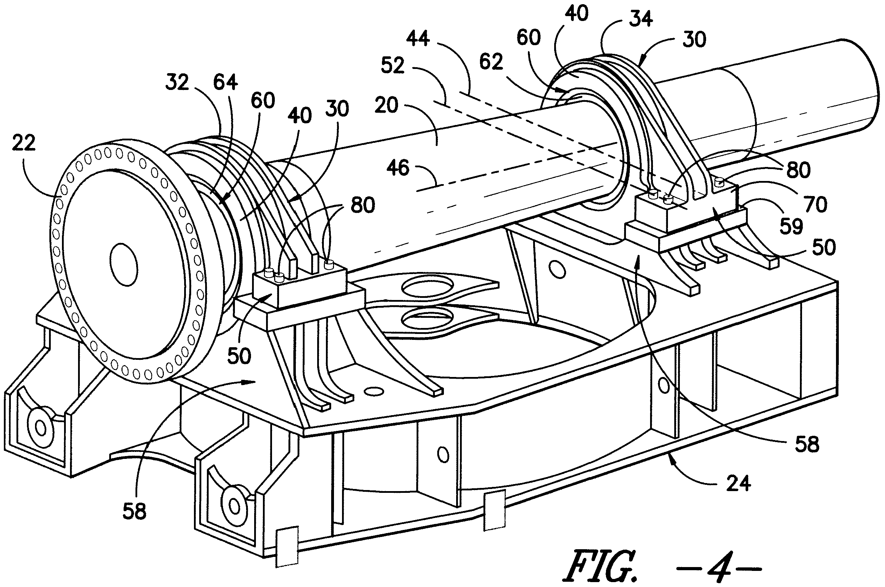

FIGS. 2 and 4 illustrate various embodiments of a shaft 20 according to the present disclosure. The shaft 20 includes a flange 22 for mounting the hub thereon. The shaft 20 further extends into the nacelle 14 and is operably connected to a generator (not shown). The shaft 20 in some embodiments may be a direct-drive shaft 20. In these embodiments, the shaft 20 is directly connected to the generator. Alternatively, a gearbox (not shown) may be disposed between the shaft 20 and the generator, and may provide the operable connection between the shaft 20 and the generator. Rotation of the rotor blades 16 is transmitted through the hub 18 to the shaft 20, and from the shaft 20 to the generator.

A bed plate 24 may be provided to support the shaft 20, as shown. In general, the bed plate 24 is a frame disposed in the nacelle 14. The bed plate 24 may, in some embodiments, further provide support for other components of the wind turbine 10, such as the generator and/or, if present, the gearbox.

As shown in FIGS. 2 through 4, the bed plate 24 according to the present disclosure may include a pillow block 30, or a plurality of pillow blocks 30, thereon for accommodating and supporting the shaft 20. In one embodiment as shown in FIG. 2, the bed plate 24 includes a forward pillow block 32 and an aft pillow block 34. The forward pillow block 32 is the pillow block adjacent the hub 18, and the aft pillow block 34 is the pillow block distal from the hub 18. It should be understood, however, that the present disclosure is not limited to a forward pillow block 32 and an aft pillow block 34. Rather, any number or form of pillow blocks 30 is within the scope and spirit of the present disclosure.

The pillow block 30 of the present disclosure includes a sleeve 40. The sleeve 40 may be configured to accommodate the shaft 20 extending therethrough. Thus, the sleeve 40 defines an opening 42 therein with a cross-sectional area generally equal to or larger than the cross-sectional area of the shaft 20 at the portion of the shaft 20 extending therethrough. The sleeve 40 may further define a generally horizontal centerline 44 and an axial centerline 46. The generally horizontal centerline 44 may extend generally horizontally across the opening 42 and define the horizontal centerline of the opening 42 and, desirably, the shaft 20 when disposed therein. The axial centerline 46 may extend axially through the opening 42 and define the axial centerline of the opening 42 and, desirably, the shaft 20 when disposed therein.

The pillow block 30 of the present disclosure further includes a mount 50. The mount 50 may extend from the sleeve 40, and be provided to mount the pillow block 30 to the bed plate 24. The mount 50 may define a generally horizontal axis 52. The generally horizontal axis 52 may be defined across the upper portion or upper surface 54 or surfaces 54 of the mount 50. The mount 50 may further define a mounting surface 56 or a plurality of mounting surfaces 56. In exemplary embodiments, as shown in FIG. 2, the mounting surfaces 56 may be configured for directly mounting the pillow block 30 to the bed plate 24. Thus, according to these embodiments, the mounting surfaces 56 are those surfaces that contact and interact with the bed plate 24 to mount the pillow block 30 to the bed plate 24, such as to the upper surface 57 or upper surfaces 58 of the bed plate 24.

In other embodiments, as shown in FIG. 4, the mounting surfaces 56 may be configured for mounting the pillow block 30 to a pedestal 58. For example, the bed plate 24 in these embodiments may include a pedestal 58. The pedestal 58 may be provided for lifting and aligning the shaft 20 and supporting the pillow block 30. Thus, according to these embodiments, the mounting surfaces 56 are those surfaces that contact and interact with the pedestal 58 to mount the pillow block 30 to the pedestal 58, such as to the upper surface 59 or upper surfaces 59 of the pedestal 58.

The mount 50 according to the present disclosure may be integral with the sleeve 40. Thus, the sleeve 40 and mount 50 may be formed together and from the same materials as a single, unitary component. In one exemplary embodiment, for example, the sleeve 40 and mount 50 may be formed through casting, and thus may be integrally cast as a single component. Alternatively, however, the sleeve 40 and mount 50 may be formed through any suitable manufacturing process.

By forming the pillow block 30 to include a sleeve 40 and mount 50 extending therefrom as discussed above, the need for a prior art pedestal to couple a pillow block to the bed plate may, in some embodiments, be eliminated. Thus, a number of failure points in the wind turbine 10 may beneficially be eliminated, because many various mechanical fasteners and/or other fastening devices or techniques, such as welding, may no longer be required to fasten both a prior art pillow block and pedestal together and prior art pedestal and bed plate together. Further, the pillow block 30 of the present disclosure may have a reduced weight compared to prior art pillow blocks and pedestals, because various supports and mounting features that were previously required may be reduced or eliminated. Additionally, the pillow block 30 of the present disclosure may have a better structural quality and be less complex than the prior art separately formed and assembled pillow blocks and pedestals, and may allow for loads experienced by the pillow block 30 due to the weight of the shaft 20 to beneficially be transferred directly to the bed frame 24, rather than through an intersection between a prior art pillow block and pedestal and then to the bed frame 24.

The pillow block 30 may further include a bearing 60 disposed in the sleeve 40. In some embodiments, the bearing 60 may be a floating bearing 62 configured to provide a clearance fit for the shaft 24. In these embodiments, the bearing 62 generally does not support axial loads on the shaft 24. In other embodiments, the bearing 60 may be a locating bearing 64 configured to provide an interference fit for the shaft 24. In these embodiments, the bearing 64 generally does support the axial loads on the shaft 24.

As discussed above, the pillow block 30 according to the present disclosure may, in some embodiments, be an aft pillow block 34 or a forward pillow block 32. In some embodiments wherein the pillow block 30 is an aft pillow block 34, the pillow block 34 may include a floating bearing 62. Further, in some embodiments wherein the pillow block is a forward pillow block 32, the pillow block 32 may include a locating bearing 64.

It should be understood, however, that the present disclosure is not limited to the above combinations of bearings and pillow blocks, and rather that any suitable combinations of bearings and pillow blocks are within the scope and spirit of the present disclosure.

In some embodiments, the generally horizontal centerline 44 of the sleeve 40 and the generally horizontal axis 52 of the mount 50 may be generally aligned. In some of these embodiments, the sleeve 40 may be configured to accept a portion of the axial loads from the shaft 20. For example, in some of these embodiments, the pillow block 30 may be a forward pillow block 32, and a locating bearing 64 may be disposed in the sleeve 40. The alignment of the generally horizontal centerline 44 and the generally horizontal axis 52 may reduce or eliminate bending and deformation of the sleeve 40, and pillow block 30 in general, due to the axial loads.

In other embodiments, however, the generally horizontal axis 52 of the mount 50 may be offset from the generally horizontal centerline 44 of the sleeve 40. In some of these embodiments, the sleeve 40 may not be configured to accept axial loads from the shaft 20. For example, in some of these embodiments, the pillow block 30 may be an aft pillow block 34, and a floating bearing 62 may be disposed in the sleeve 40. Because no axial loading is being accepted by the sleeve 40, there may be a significantly reduced chance of bending and deformation of the sleeve 40 and pillow block 30. The offset between the generally horizontal centerline 44 and the generally horizontal axis 52 may reduce the amount of material required to manufacture the pillow block 30, and may thus reduce the weight of the pillow block 30. Additionally, the offset may allow for the pillow block 30 to have an even better structural quality and be even less complex, and may better allow for loads experienced by the pillow block 30 due to the weight of the shaft 20 to beneficially be transferred to the bed frame 24, either directly or through the pedestal 58.

In some embodiments, as shown in FIGS. 2 through 4, the mount 50 may comprise a plurality of mount blocks 70. Each of the mount blocks 70 may define an upper surface 54 and mounting surface 56. FIGS. 2 through 4 illustrate pillow blocks 30 each having two mount blocks 70 generally spaced from each other across the width of the pillow blocks 30. It should be understood, however, that the present disclosure is not limited to two mount blocks 70 spaced as shown, and rather that any suitable number and spacing of mount blocks 70 is within the scope and spirit of the present disclosure.

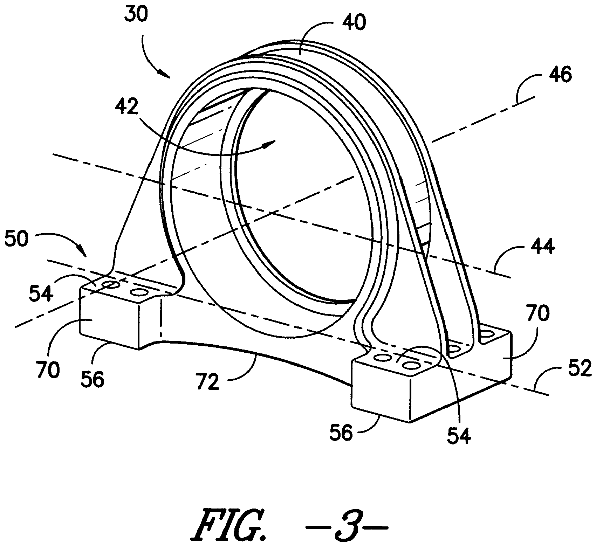

In some embodiments, the mount 50 may include a cutaway portion 72 or cutaway portions 72. The cutaway portions 72 may be defined in the mount between the mount blocks 70, or between various of the mount blocks 70. In general, the cutaway portions 72 are those portions of the base of the mount 72 proximate but generally not in contact with the bed plate 24, and thus not considered mounting surfaces 56. The cutaway portions 72 may be generally arcuate cutaway portions, as shown in FIG. 3, or may have any suitable cutaway shape. The cutaway portions 72 allow for the mounting surface 56 of the mount 50 or the mounting surfaces 56 of the mount blocks 70 to be more accurately and securely mounted to the bed plate 24.

In some embodiments, as shown in FIG. 2, the pillow block 30 of the present disclosure may further include a mechanical fastener 80, or a plurality of mechanical fasteners 80, mounting the mount 50 to the bed plate 24. The mechanical fasteners 80 may be, for example, nuts and bolts, rivets, screws, nails, or any other suitable mechanical fasteners 80. The mechanical fasteners 80 may generally extend through the mount 50 or mount blocks 70 and into the bed plate 24 to mount the mount 50, and thus the pillow block 30, to the bed plate 24. As shown in FIG. 2, for example, the mechanical fasteners 80 may extend through the upper surface 54 and mounting surface 56 of each of the mount blocks 70 and into the bed plate 24 to mount the mount 50, and thus the pillow block 30, to the bed plate 24. Advantageously, the use of mechanical fasteners 80 may provide a more secure and reliable connection between the pillow block 30 and the bed plate 24 as compared to the welded connection between the prior art pedestal and bed plate 24. However, it should be understood that in alternative embodiments, any suitable fastening device or technique, including welding, may be utilized to mount the pillow block 30 to the bed plate 24.

In other embodiments, as shown in FIG. 4, the pillow block 30 of the present disclosure may further include a mechanical fastener 80, or a plurality of mechanical fasteners 80, mounting the mount 50 to the pedestal 58. The mechanical fasteners 80 may be, for example, nuts and bolts, rivets, screws, nails, or any other suitable mechanical fasteners 80. The mechanical fasteners 80 may generally extend through the mount 50 or mount blocks 70 and into the pedestal 58 to mount the mount 50, and thus the pillow block 30, to the pedestal 58. As shown in FIG. 4, for example, the mechanical fasteners 80 may extend through the upper surface 54 and mounting surface 56 of each of the mount blocks 70 and into the pedestal 58 to mount the mount 50, and thus the pillow block 30, to the pedestal 58. The mechanical fasteners 80 may further extend through the pedestal 58 into the bed plate 24, or the pedestal 58 may be mounted to the bed plate 24 through welding or any other suitable fastening device or technique.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A pillow block for a bed plate of a wind turbine, the pillow block comprising:
   a sleeve defining a generally horizontal centerline and an axial centerline, the sleeve configured to accommodate a shaft generally extending along the axial centerline therethrough; and,
   a mount extending from the sleeve, the mount defining a generally horizontal axis and at least one mounting surface, the at least one mounting surface configured for directly mounting the pillow block to the bed plate.
2. The pillow block of clause 1, wherein the generally horizontal axis is offset from the generally horizontal centerline.
3. The pillow block of any preceding clause, wherein the mount comprises a plurality of mount blocks, each of the mount blocks defining a mounting surface.
4. The pillow block of any preceding clause, wherein the mount further comprises a cutaway portion defined between the mount blocks.
5. The pillow block of any preceding clause, wherein the sleeve and the mount are integrally cast.
6. The pillow block of any preceding clause, wherein the pillow block is an aft pillow block.
7. The pillow block of any preceding clause, further comprising a bearing disposed in the sleeve, the bearing configured to provide a clearance fit for the shaft.
8. The pillow block of any preceding clause, further comprising a plurality of mechanical fasteners mounting the mount to the bed plate.
9. A bed plate for a wind turbine, the bed plate comprising:
   a plurality of pillow blocks, at least one of the plurality of pillow blocks comprising:
   a sleeve defining a generally horizontal centerline and an axial centerline, the sleeve configured to accommodate a shaft generally extending along the axial centerline therethrough; and,
   a mount extending from the sleeve, the mount defining a generally horizontal axis and at least one mounting surface, the at least one mounting surface configured for directly mounting the pillow block to the bed plate.
10. The bed plate of any preceding clause, wherein the generally horizontal axis is offset from the generally horizontal centerline.
11. The bed plate of any preceding clause, wherein the mount comprises a plurality of mount blocks, each of the mount blocks defining a mounting surface.
12. The bed plate of any preceding clause, wherein the mount further comprises a cutaway portion defined between the mount blocks.
13. The bed plate of any preceding clause, wherein the sleeve and the mount are integrally cast.
14. The bed plate of any preceding clause, wherein the at least one of the plurality of pillow blocks is an aft pillow block.
15. The bed plate of any preceding clause, wherein the at least one of the plurality of pillow blocks further comprises a bearing disposed in the sleeve, the bearing configured to provide a clearance fit for the shaft.
16. The bed plate of any preceding clause, wherein each of the plurality of pillow blocks comprises a sleeve and a mount extending from the sleeve.
17. The bed plate of any preceding clause, further comprising a plurality of mechanical fasteners mounting the mount to the bed plate.
18. A pillow block for a bed plate of a wind turbine, the pillow block comprising:
   a sleeve defining a generally horizontal centerline and an axial centerline, the sleeve configured to accommodate a shaft generally extending along the axial centerline therethrough; and,
   a mount extending from the sleeve, the mount defining a generally horizontal axis and at least one mounting surface, the at least one mounting surface configured for mounting the pillow block to a pedestal of the bed plate;
   wherein the generally horizontal axis is offset from the generally horizontal centerline.
19. The pillow block of any preceding clause, wherein the mount comprises a plurality of mount blocks, each of the mount blocks defining a mounting surface.
20. The pillow block of any preceding clause, wherein the at least one pillow block is an aft pillow block.

## Claims

1. A pillow block (30) for a bed plate (24) of a wind turbine (10), the pillow block (30) comprising:
a sleeve (40) defining a generally horizontal centerline (44) and an axial centerline (46), the sleeve (40) configured to accommodate a shaft (20) generally extending along the axial centerline (46) therethrough; and
a mount (50) extending from the sleeve (40), the mount (50) defining a generally horizontal axis (52) and at least one mounting surface (56), the at least one mounting surface (56) configured for directly mounting the pillow block (30) to the bed plate (24).

2. The pillow block (30) of claim 1, wherein the generally horizontal axis (52) is offset from the generally horizontal centerline (44).

3. The pillow block (30) of any of claims 1 to 2, wherein the mount (50) comprises a plurality of mount blocks (70), each of the mount blocks (70) defining a mounting surface (56).

4. The pillow block (30) of any preceding claim, wherein the mount (50) further comprises a cutaway portion (72) defined between the mount blocks (70).

5. The pillow block (30) of any of claims 1 to 4, wherein the sleeve (40) and the mount (50) are integrally cast.

6. The pillow block (30) of any of claims 1 to 5, further comprising a plurality of mechanical fasteners (80) mounting the mount (50) to the bed plate (24).

7. A bed plate (24) for a wind turbine (10), the bed plate (24) comprising:
a plurality of pillow blocks (30), at least one of the plurality of pillow blocks (30) comprising:
a sleeve (40) defining a generally horizontal centerline (44) and an axial centerline (46), the sleeve (40) configured to accommodate a shaft (20) generally extending along the axial centerline (46) therethrough; and
a mount (50) extending from the sleeve (40), the mount (50) defining a generally horizontal axis (52) and at least one mounting surface (56), the at least one mounting surface (56) configured for directly mounting the pillow block (30) to the bed plate (24).

8. The bed plate (24) of claim 7, wherein the generally horizontal axis (52) is offset from the generally horizontal centerline (44).

9. The bed plate (24) of any of claims 7 to 8, wherein the mount (50) comprises a plurality of mount blocks (70), each of the mount blocks (70) defining a mounting surface (56).

10. The bed plate (24) of any of claims 7 to 9, wherein the mount (50) further comprises a cutaway portion (72) defined between the mount blocks (70).

11. The bed plate (24) of any of claims 7 to 10, wherein the sleeve (40) and the mount (50) are integrally cast.

12. The bed plate (24) of any of claims 7 to 11, further comprising a plurality of mechanical fasteners (80) mounting the mount (50) to the bed plate (24).

13. A pillow block (30) for a bed plate (24) of a wind turbine (10), the pillow block (30) comprising:
a sleeve (40) defining a generally horizontal centerline (44) and an axial centerline (46), the sleeve (40) configured to accommodate a shaft (20) generally extending along the axial centerline (46) therethrough; and
a mount (50) extending from the sleeve (40), the mount (50) defining a generally horizontal axis (52) and at least one mounting surface (56), the at least one mounting surface (56) configured for mounting the pillow block (30) to a pedestal (58) of the bed plate (24);
wherein the generally horizontal axis (52) is offset from the generally horizontal centerline (44).

14. The pillow block (30) of claim 13, wherein the mount (50) comprises a plurality of mount blocks (70), each of the mount blocks (70) defining a mounting surface (56).

15. The pillow block (30) of any of claims 13 to 14, wherein the at least one pillow block (30) is an aft pillow block (34).
